**Europäisches Patentamt**

**European Patent Office**

**Office européen des brevets**

(11) Veröffentlichungsnummer: **0 280 287**
**B1**

(12) **EUROPÄISCHE PATENTSCHRIFT**

(45) Veröffentlichungstag der Patentschrift:
**11.07.90**

(21) Anmeldenummer: **88102775.9**

(22) Anmeldetag: **25.02.88**

(51) Int. Cl.⁵: **F16K 5/06,** F16K 25/00

(54) **Dichtring für das Kugelküken bei Kugelhähnen.**

(30) Priorität: **26.02.87 DE 3706215**
**11.04.87 DE 3712408**

(43) Veröffentlichungstag der Anmeldung:
**31.08.88 Patentblatt 88/35**

(45) Bekanntmachung des Hinweises auf die Patenterteilung:
**11.07.90 Patentblatt 90/28**

(84) Benannte Vertragsstaaten:
**AT BE CH DE FR LI NL**

(56) Entgegenhaltungen:
**DE-A- 1 907 648**
**DE-A- 2 609 446**
**DE-A- 3 438 772**
**DE-A- 3 526 731**
**DE-B- 2 546 595**
**US-A- 2 606 738**
**US-A- 4 603 836**

(73) Patentinhaber: **HEUTE & COMP., Kaiserstrasse 186-188,**
**D-5608 Radevormwald(DE)**

(72) Erfinder: **Rückert, Willi, Johannesstrasse 18,**
**D-5632 Wermelskirchen(DE)**

(74) Vertreter: **Peerbooms, Rudolf, Dipl.-Phys.,**
**Postfach 200 208 Dickmannstrasse 45c,**
**D-5600 Wuppertal 2(DE)**

## Beschreibung

Die Erfindung betrifft einen Dichtring für das Kugelküken bei Kugelhähnen mit diametral geteiltem Gehäuse, der aus PTFE (Polytetrafluoräthylen) besteht und einen einen Stützring umschließenden Außenmantel mit einwärts gerichteter Dichtmanschette für das Kugelküken aufweist.

Bei einem bekannten derartigen Dichtring (DE-AS 25 46 595) bilden der Außenmantel und die Dichtmanschette ein nach hinten offenes V-Profil, in das eine ebenfalls im Querschnitt V-förmige Ringfeder unter leichter Aufweitung des V-Profils des selbst nicht federelastischen Dichtringes eingesetzt ist. Die Ringfeder stützt sich mit ihren freien Schenkelrändern an einer Ringschulter des Kugelhahngehäuses ab und drückt die Dichtmanschette im wesentlichen axial gegen das Kugelküken und den Außenmantel radial gegen das Kugelhahngehäuse. Bei derartigen Ringfedern ist der Federungsweg der beiden V-Schenkel sehr begrenzt, so daß der Anpreßdruck schon bei einem geringen Abrieb an der Dichtmanschette nachläßt, was insbesondere zu Undichtigkeiten zwischen Dichtringaußenmantel und Gehäuse führen kann. Darüber hinaus sind die Elastizität und Federungskraft solcher Ringfedern stark temperaturabhängig. Bei dieser Abdichtung wird die Dichtwirkung durch eine statische Vorspannung erreicht. Die bei unterschiedlichen Einsatzbedingungen wechselnden Faktoren wie Mediendruck und Medientemperatur können dabei nur in einem unbefriedigenden Rahmen berücksichtigt werden. Unabhängig vom Druck des abzudichtenden Medien ist aufgrund der statischen Vorspannung auch bei geringen Betriebsdrücken ein relativ großes Drehmoment zum Bewegen des Kugelkükens erforderlich.

Es ist ferner bekannt, zur Abdichtung der Kugel bei Kugelhähnen wulstartige Dichtringe zu verwenden, die an der Kugelanlageseite in einer kleinen Dichtlippe auslaufen. Die der Kugel abgewandte Rückseite des Dichtringes ist für eine gehäuseseitige Einspannung geeignet ausgebildet. Bei den bekannten Dichtringen wird die Abdichtung der Kugel im wesentlich durch Kompression der Dichtringe erreicht. Es hat sich aber gezeigt, daß bei starkem Temperaturwechsel die Kompressibilität und Elastizität oft nicht ausreichen, um die aufgrund unterschiedlicher Ausdehnungskoeffizienten von Dichtring, Einspannelementen und Kugelküken bedingten Bewegungen zu kompensieren. Die Dichtwirkung ist bei den bekannten Kugelhähnen auch nur begrenzt durch Erhöhung der Einspannkraft der Dichtringe verbesserbar, da die Kugelhähne mit zunehmender Einspannkraft schwergängiger werden.

Der Erfindung liegt die Aufgabe zugrunde, eine leichtgängige, auch bei starken Temperaturschwankungen zuverlässige Kugelkükenabdichtung für Kugelhähne zu schaffen.

Zur Lösung dieser Aufgabe ist erfindungsgemäß vorgesehen, daß der Stützring starr ausgebildet ist und eine konische Anschlagfläche aufweist, daß die Dichtmanschette des Dichtringes in nichtmontiertem Zustand eine ebene öder annähernd ebene Scheibe ist, die bei der Montage unter Aufweitung ihrer Innenöffnung bis Auftreffen auf die konische Anschlagfläche des Stützringes flexibel einstülpbar ist, daß der Schwenkwinkel zwischen ebener Scheibe und konischer Anschlagfläche etwa 30° bis 45° beträgt, und daß der Dichtring an seiner Rückseite einen vom Außenmantel nach innen ragenden, die rückwärtige Stirnfläche des Stützringes hintergreifenden Innenflansch als gehäuseseitige Abdichtung aufweist. Bei der Erfindung wird die Abdichtung durch eine "doppellippige" PTFE-Dichtung mit unverlierbar integriertem Edelstahlstützring bewirkt. Die Dichtmanschette, die im Anlieferungszustand rechtwinklig zu dem Außenmantel steht, wird bei der Montage des Kugelhahnes mechanisch um einen relativ weiten "Ausbiegeweg" unter beträchtlicher Aufweitung ihrer Innenöffnung verformt. Der innere Bereich der Dichtmanschette wird dabei in starkem Maß in Umfangsrichtung gedehnt, und wegen der starken Rückverformungstendenz von PTFE, die angesichts des Memory-Effektes über lange Zeiten erhalten bleibt, schnürt die Dichtmanschette allein schon aufgrund ihrer Kontraktionskräfte das Kugelküken ein. Sobald Druck in das System eingebracht wird, entsteht eine zusätzliche, mit dem Systemdruck variierende Andruckkraft auf die als dynamische Dichtlippe wirkende Dichtmanschette. Der auf der Gehäuseseite liegende Innenflansch stellt die statische, d. h., die vom Mediendruck unabhängige Abdichtung sicher. Durch die Erfindung werden wesentliche Vorteile erreicht. Zum einen wird auch bei stark schwankenden Betriebstemperaturen durch die vom Mediendruck abhängige Kraftkomponente immer noch eine ausreichende Dichtpressung erreicht. Zum anderen ergibt sich bei hohen und niedrigen Betriebsdrücken ein nahezu konstantes Drehmoment, welches nur 1/10 so groß ist wie bei herkömmlichen Kugelhahndichtungen. Ferner ist der Abriebsverschleiß infolge der druckabhängigen Anpressung erheblich verringert, und der materialbedingte Kaltfluß ist durch die Entlastung der Kugeldichtungen im drucklosen Zustand minimiert.

Der Erfindung zufolge kann ferner vorgesehen werden, daß der Dichtring in nichtmontiertem Zustand etwa ein U-Profil und der Stützring ein etwa rechteckiges, an einer Ecke unter Bildung der geneigten Anschlagfläche abgefastes Querschnittsprofil aufweisen, und daß neben der Anschlagfläche eine radiale, den Abbiege-Fußbereich der Dichtmanschette verbreitende Widerlagerfläche am Stützring vorgesehen ist. Zweckmäßigerweise überragen die Dichtmanschette und der Innenflansch den Stützring einwärts um etwa die Wandstärke des Stützringes oder mehr. Durch diese spezielle Ausbildung des Dichtringes und des Stützringes ist gewährleistet, daß sich die Dichtmanschette stets in eine tangentiale Dichtanlage zur Kugeloberfläche einstellt, d. h. nahezu die gesamte radiale Breite der Dichtmanschette trägt zur Abdichtung der Kugel bei. Aufgrund dieser großflächigen Anlage zwischen Dichtmanschette und Kugeloberfläche wird die Abdichtwirkung des Dichtringes wesentlich erhöht.

In Ausgestaltung der Erfindung kann vorgesehen werden, daß der Innenflansch in einer sich verjüngenden Dichtlippe ausläuft. Diese Dichtlippe wird vom abzusperrenden Mediumdruck beaufschlagt, wodurch die Abdichtanlage an den gehäuseseitigen Einspannmitteln noch in einem verstärkten Maße sichergestellt wird.

Gemäß einer speziellen Ausführungsform der Erfindung kann vorgesehen werden, daß die rückwärtige Stirnfläche des Innenflansches in einer Diametralebene liegt und daß die vordere Stirnfläche des Innenflansches einen ebenen, am Stützring anliegenden äußeren Bereich und einen abgeschrägten inneren Bereich aufweist.

Vorteilhafterweise ist die radiale Breite der Dichtmanschette, d. h. die Differenz zwischen ihrem Außen- und Innenradius, etwa gleich der axialen Länge der Dichtmanschette.

In weiterer Ausgestaltung der Erfindung kann vorgesehen werden, daß die Innenöffnung der Dichtmanschette in der Grundstellung konisch, zur Kugelanlageseite hin sich erweiternd, ausgebildet ist, wobei der Konuswinkel etwa gleich dem maximalen Auslenkwinkel der Dichtmanschette ist. Beim Auftreffen der Dichtmanschette auf den Stützring weitet sich die von Hause aus konische Innenöffnung in eine zylindrische Durchgangsöffnung, so daß ein bündiger Übergang vom Dichtring zum Druckmittelanschluß erreicht werden kann.

Gemäß einer alternativen Ausführungsform der Erfindung kann der Innenflansch an seiner rückwärtigen Stirnseite mit ein oder zwei axial gerichteten Dichtlippen versehen sein. Die Dichtlippen liegen direkt am Gehäuse des Kugelhahnes an und sorgen damit für eine gehäuseseitige Abdichtung.

Weiterhin kann vorgesehen werden, daß die Dichtmanschette in nicht montiertem Zustand gegenüber der Radialebene leicht einwärts geneigt ist.

Der Stützring kann aus Kunststoff oder vorzugsweise aus Stahl bestehen.

Die Erfindung wird im folgenden anhand der Zeichnung näher erläutert. Es zeigen :

Fig. 1, 2 und 3 jeweils im Querschnitt drei verschiedene Ausführungsformen des Dichtringes nach der Erfindung vor der Montage und

Fig. 4 den Dichtring nach Fig. 3 in montiertem Zustand.

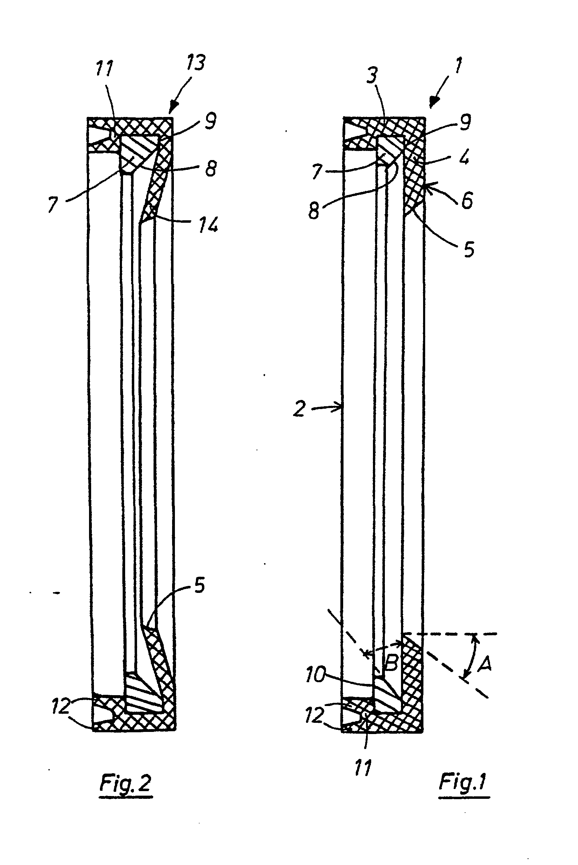

Fig. 1 zeigt einen Dichtring 1 aus PTFE, der ein zur Rückseite 2 hin weitgehend offenes L-Winkelprofil besitzt. Der Dichtring 1 besteht aus einem Außenmantel 3 und einer, die Kugelanlage bildenden, ringscheibenförmigen Dichtmanschette 4, wobei der Außenmantel 3 und die Dichtmanschette 4 etwa gleiche Wandstärke besitzen. Die Innenöffnung 5 der Dichtmanschette 4 ist in der Grundstellung konisch, zur Kugelanlageseite 6 sich erweiternd, ausgebildet, wobei der Konuswinkel A etwa gleich dem maximalen Schwenkwinkel B der Dichtmanschette 4 ist. In dem Außenmantel 3 sitzt ein Stützring 7 aus Kunststoff oder Edelstahl, der ein rechteckiges Querschnittsprofil besitzt, das an seiner inneren, der Dichtmanschette 4 zugewandten Ecke unter Bildung ener schrägen Anschlagfläche 8 abgefast ist, wobei zwischen schräger Anschlagfläche 8 und Außenumfang eine radiale, den Abbiege-Fußbereich der Dichtmanschette 4 verbreiternde Widerlagerfläche 9 am Stützring 7 belassen ist. Der Stützring 7 ist an seiner Rückseite 10 von einem Innenflansch 11 des Dichtringes 1 hintergriffen, so daß er unverlierbar gehalten ist. Der Innenflansch 11 ist an seiner rückwärtigen Stirnseite mit zwei axial gerichteten Dichtlippen 12 versehen.

Fig. 2 zeigt eine alternative Ausführungsform eines Dichtringes 13, bei dem die Dichtmanschette 14 in nichtmontiertem Zustand bereits gegenüber der Radialebene etwas einwärts geneigt ist. Dieser Neigungswinkel ist deutlich kleiner als der Neigungswinkel der Stützfläche 8, so daß noch ein großer Schwenkwinkel für die Auslenkung der Dichtmanschette 14 verbleibt.

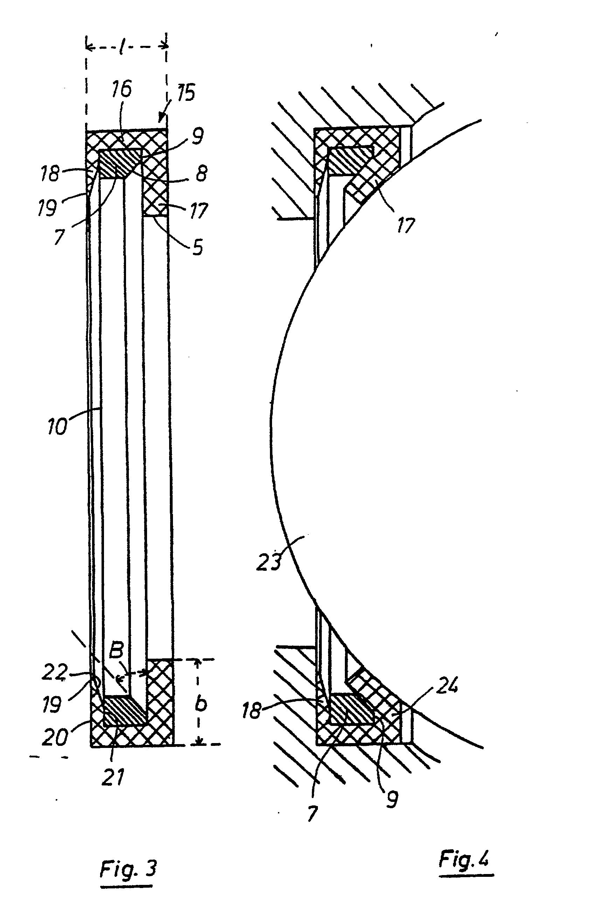

Fig. 3 zeigt eine bevorzugte Ausführungsform, bei der der PTFE-Dichtring 15, der ein nach innen hin offenes U-Profil besitzt, welches aus dem Außenmantel 16, der die Kugelanlage bildenden ringscheibenförmigen Dichtmanschette 17 und dem Innenflansch 18 besteht. Der Innenflansch 18 hintergreift und überragt den Stützring 7 und läuft radial einwärts in einer sich verjüngenden Dichtlippe 19 aus. Die rückwärtige Stirnfläche 20 des Innenflansches 18 liegt in einer Diametralebene. Die vordere Stirnfläche des Innenflansches 18 weist einen ebenen, am Stützring 7 anliegenden äußeren Bereich 21 und einen abgeschrägten, inneren Bereich 22 auf. Die radiale Breite $\underline{b}$ der Dichtmanschette 17 ist etwa gleich der axialen Länge $\underline{l}$ des Außenmantels 16.

Bei der Montage (vgl. Fig. 4) wird die vordere Dichtmanschette 17 von dem Kugelküken 23 um ihre in Höhe des nicht abgefasten Teiles 9 der Stützring-Stirnwand liegenden Fußbereich 24 bis Auftreffen auf den an seiner Vorderseite konisch abgeschrägten Stützring 7 flexibel zurückgebogen. Der Innenflansch 18 wird bei der Montage zwischen dem Stützring 7 und den gehäuseseitigen Einspannmitteln 25 eingespannt, so daß der Dichtring 15 auch an seiner Rückseite eine einwandfreie Abdichtung gewährleistet. Die Dichtmanschette 17 überragt den Stützring 7 um etwa das 1 1/2-fache der Stützring-Wandstärke, so daß sich eine breite Anlagefläche zwischen Dichtmanschette 17 und Kugelküken ergibt. Der Anpreßdruck für die Dichtmanschette 17 und für den Innenflansch 18 wird bei drucklosem Medium im wesentlichen durch die Biegeelastizität bzw. die Rückstelltendenz der im zentralen Bereich stark aufgeweiteten Dichtmanschette 17 geliefert und bleibt auch bei Abrieb oder bei Änderungen der Temperatur des Mediums aufrechterhalten.

## Patentansprüche

1. Dichtring (1, 13, 15) für das Kugelküken (23) bei Kugelhähnen mit diametral geteiltem Gehäuse, der aus PTFE (Polytetrafluoräthylen) besteht und einen Stützring (7) umschließenden Außenmantel (3, 16) mit einwärts gerichteter Dichtmanschette (4, 14, 17) für das Kugelküken (23) aufweist, dadurch gekennzeichnet, daß der Stützring starr ausgebildet ist und eine konische Anschlagfläche (8) aufweist, daß die Dichtmanschette (4, 14, 17) des Dichtringes (1, 13, 15) in nichtmontiertem Zustand eine ebene oder annähernd ebene Scheibe ist, die bei der Montage unter Aufweitung ihrer Innenöffnung (5) bis Auftreffen auf die konische Anschlagfläche (8) des Stützringes (7) flexibel einstülpbar ist, daß der Schwenkwinkel (B) zwischen ebener Scheibe und konischer Anschlagfläche (8) etwa 30° bis 45° beträgt und daß der Dichtring (1, 13, 15) an seiner Rückseite einen vom Außenmantel (3, 16) nach innen ragenden, die rückwärtige Stirnfläche (10) des Stützringes (7) hintergreifenden Innenflansch (11, 18) als gehäuseseitige Abdichtung aufweist.

2. Dichtring nach Anspruch 1, dadurch gekennzeichnet, daß der Dichtring (15) in nichtmontiertem Zustand etwa ein U-Profil und der Stützring (7) ein etwa rechteckiges, an einer Ecke unter Bildung der geneigten Anschlagfläche (8) abgefastes Querschnittsprofil aufweisen, und daß neben der Anschlagfläche (8) eine radiale, den Abbiege-Fußbereich der Dichtmanschette (17) verbreiternde Widerlagerfläche (9) am Stützring (7) vorgesehen ist.

3. Dichtring nach den Ansprüchen 1 oder 2, dadurch gekennzeichnet, daß die Dichtmanschette (17) und der Innenflansch (18) den Stützring (7) einwärts um etwa die Wandstärke des Stützringes oder mehr überragen.

4. Dichtring nach Anspruch 1, dadurch gekennzeichnet, daß der Innenflansch (18) in einer sich verjüngenden Dichtlippe (19) ausläuft.

5. Dichtring nach Anspruch 4, dadurch gekennzeichnet, daß die rückwärtige Stirnfläche (20) des Innenflansches (18) in einer Diametralebene liegt und daß die vordere Stirnfläche des Innenflansches einen ebenen, am Stützring (7) anliegenden äußeren Bereich (21) und einen abgeschrägten inneren Bereich (22) aufweist.

6. Dichtring nach den Ansprüchen 1 bis 5, dadurch gekennzeichnet, daß die radiale Breite (b) der Dichtmanschette (17), d. h. die Differenz zwischen ihrem Außen- und Innenradius, etwa gleich der axialen Länge (l) des Außenmantels (16) ist.

7. Dichtring nach einem der Ansprüche 1 bis 6, dadurch gekennzeichnet, daß die Innenöffnung (5) der Dichtmanschette (4) in der Grundstellung konisch, zur Kugelanlageseite (6) hin sich erweiternd, ausgebildet ist, wobei der Konuswinkel (A) etwa gleich dem maximalen Auslenkwinkel (B) der Dichtmanschette (4) ist.

8. Dichtring nach Anspruch 1, dadurch gekennzeichnet, daß der Innenflansch (11) an seiner rückwärtigen Stirnseite mit ein oder zwei, axial gerichteten Dichtlippen (12) versehen ist.

9. Dichtring nach einem der Ansprüche 1 bis 8, dadurch gekennzeichnet, daß die Dichtmanschette (14) in nicht montiertem Zustand gegenüber der Radialebene leicht einwärts geneigt ist.

10. Dichtring nach einem der Ansprüche 1 bis 9, dadurch gekennzeichnet, daß der Stützring (7) aus Kunststoff oder Edelstahl besteht.

**Revendications**

1. Bague d'étanchéité (1, 13, 15), pour boisseau sphérique (23) de robinets à boisseau sphérique présentant un carter divisé diamètralement, qui est en PTFE (polytétrafluoréthylène) et présente une enveloppe extérieure (3, 16), entourant une bague d'appui (7) et comportant une garniture d'étanchéité (4, 14, 17) orientée vers l'intérieur, pour le boisseau sphérique (23), caractérisée par le fait que la bague d'appui est rigide et présente une face de butée conique (8), que la garniture d'étanchéité (4, 14, 17) de la bague d'étanchéité (1, 13, 15) est; à l'état non monté, un disque plan ou à peu près plan, qui, lors du montage, se replie vers l'intérieur de manière flexible avec agrandissement de son ouverture intérieure (5) jusqu'à ce qu'il s'applique sur la face de butée conique (8) de la bague d'appui (7), que l'angle de pivotement (B) entre disque plan et face de butée conique (8) est d'à peu près 30° à 45° et que la bague d'étanchéité (1, 13, 15) présente sur sa face arrière, à titre d'étanchéité côté carter, une bride intérieure (11, 18) faisant saillie de l'enveloppe extérieure (3, 16) vers l'intérieur, et s'engageant sur la face frontale arrière (10) de la bague d'appui (7).

2. Bague d'étanchéité selon la revendication 1, caractérisée par le fait qu'à l'état non monté, la bague d'étanchéité (15) présente un profil à peu près en U et que la bague d'appui (7) présente un profil de section transversal à peu près rectangulaire, écorné sur un coin en formant la face de butée inclinée (8), et qu'outre la face de butée (8), il est prévu sur la bague d'appui (7) une face d'appui (9) radiale, élargissant la zone de pied de flexion de la garniture d'étanchéité (17).

3. Bague d'étanchéité selon les revendications 1 ou 2, caractérisée par le fait que la garniture d'étanchéité (17) et la bride intérieure (18) font saillie de la bague d'appui (7) vers l'intérieur, d'à peu près la valeur de l'épaisseur de paroi de la bague d'appui, ou davantage.

4. Bague d'étanchéité selon la revendication 1, caractérisée par le fait que la bride intérieure (18) s'achève par une lèvre d'étanchéité (19) qui va en se rétrécissant.

5. Bague d'étanchéité selon la revendication 4, caractérisée par le fait que la face frontale arrière (20) de la bride intérieure (18) est située dans un plan diamétral et que la face frontale avant de la bride intérieure présente une zone extérieure (21) plane, s'appuyant sur la bague d'appui (7), et une zone intérieure (22) chanfreinée.

6. Bague d'étanchéité selon les revendications 1 à 5, caractérisée par le fait que la largeur radiale (b) de la garniture d'étanchéité (17), c'est-à-dire la différence entre son rayon extérieur et son rayon intérieur, est à peu près identique à la longueur axiale (1) de l'enveloppe extérieure (16).

7. Bague d'étanchéité selon l'une des revendications 1 à 6, caractérisée par le fait que l'ouverture intérieure (5) de la garniture d'étanchéité (4) est conique en position de base, en s'élargissant en allant vers la face d'appui sphérique (6), l'angle de cône (A) étant à peu près identique à l'angle de déviation maximal (B) de la garniture d'étanchéité (4).

8. Bague d'étanchéité selon la revendication 1, caractérisée par le fait que la bride intérieure (11) est pourvue sur sa face frontale arrière d'une ou deux lèvres d'étanchéité (12) orientées axialement.

9. Bague d'étanchéité selon l'une des revendications 1 à 8, caractérisée par le fait qu'à l'état non monté, la garniture d'étanchéité (14) est légèrement inclinée vers l'intérieur par rapport au plan radial.

10. Bague d'étanchéité selon l'une des revendications 1 à 9, caractérisée par le fait que la bague d'appui (7) est en matière plastique ou acier allié.

**Claims**

1. Gasket (1, 13, 15) for the spherical plug (23) of a ball valve with diametrically parted casing, which is made of PTFE (Polytetrafluorethylene) and which has an outer cover (3, 16) surrounding a supporting ring (7) and having an inwardly directed gasket-sleeve (4, 14, 17) for the spherical plug (23), characterised in that the supporting ring (7) is rigidly formed and has a conical stop face (8), in that the gasket sleeve (4, 14, 17) of the gasket (1, 13, 15) in an unassembled condition is a flat or almost flat disc which during assembly can be pushed in flexibly, widening its inner opening (5), until striking the conical stop face (8) of the supporting ring (7), in that the angle of traverse (B) between the flat gasket and the conical stop face (8) is approximately 30° to 45° and in that the gasket (1, 13, 15) has on its rear side an inner flange (11, 18) extending inwards (from the outer cover 3, 16) and engaging behind the rear face (10) of the supporting ring (7) as a seal at the side of the casing.

2. Gasket according to claim 1, characterised in that the gasket (15) in an unassembled condition has approximately a U-profile and in that the supporting ring (7) has an approximately rectangular cross-section, which is chamfered on one corner in forming the sloping stop face (8) and in that close to the stop face (8) there is a radial abutment face (9) on the supporting ring (7) widening the base area of the bend of the gasket-sleeve (17).

3. Gasket according to claims 1 or 2, characterised in that the gasket-sleeve (17) and the inner flange (18) extend inwards beyond the supporting ring (7) by about the thickness of the wall, or more, of the supporting ring.

4. Gasket according to claim 1, characterised in that the inner flange (18), tapers to a reduced sealing lip (19).

5. Gasket according to claim 4, characterised in that the rear face (20) of the inner flange (18) lies in a diametric plane surface and in that the front face of the inner flange has a flat outer area (21) which rests against the supporting ring (7), and a sloping inner area (22).

6. Gasket according to claims 1 to 5, characterised in that the radial width (b) of the gasket-sleeve (17), i.e. the difference between its outer and inner radius, is approximately equal to the axial length (1) of the outer cover (16).

7. Gasket according to one of claims 1 to 6, characterised in that the inner opening (5) of the gasket-sleeve (4) is, in the basic position, conical in shape, extending to the ball contact surface (6), the conical angle (A) being about equal to the maximum bend angle (B) of the gasket sleeve (4).

8. Gasket according to claim 1, characterised in that the inner flange (11) is provided on its rear face with one or two axially arranged sealing lips (12).

9. Gasket according to one of claims 1 to 8, characterised in that the gasket (14) in unassembled condition is slightly angled inwards compared to the radial surface.

10. Gasket according to one of claims 1 to 9, characterised in that the supporting ring (7) is made of plastic or high-grade steel.

_Fig.2_

_Fig.1_

Fig. 3

Fig. 4